# EUROPEAN PATENT SPECIFICATION

(11) **EP 4 379 931 B1**
(45) Date of publication and mention of the grant of the patent: **02.09.2026**
(21) Application number: 22849506.5
(22) Date of filing: 26.07.2022
(51) Int. Cl.: H01G 2/08, H01G 11/78, H01G 11/82, H01M 10/6555, H01M 50/291, H01G 11/10, H01G 11/18, H01M 10/625, H01M 10/643, H01M 10/651, H01M 10/653, H01M 50/213

(54) **ELECTRIC POWER STORAGE MODULE**
ELEKTRISCHES ENERGIESPEICHERMODUL
MODULE DE STOCKAGE D'ÉNERGIE ÉLECTRIQUE

(30) Priority: 30.07.2021 JP 2021125836; 30.07.2021 JP 2021125837
(43) Date of publication of application: 05.06.2024
(73) Proprietor: Panasonic Intellectual Property Management Co., Ltd., Osaka-shi, Osaka 540-6207 (JP)
(72) Inventor: NORIMINE, Shota, Kadoma-shi, Osaka 571-0057 (JP); OGINO, Hirotaka, Kadoma-shi, Osaka 571-0057 (JP); SATO, Kasumi, Kadoma-shi, Osaka 571-0057 (JP)
(74) Representative: Novagraaf International SA
(86) International application number: PCT/JP2022/028832
(87) International publication number: WO 2023/008445

(56) References cited:
- WO-A1-2019/182117
- WO-A1-2019/182117
- WO-A1-2022/025186
- WO-A1-2022/070974
- WO-A1-2022/091919
- WO-A1-2022/091920
- DE-A1- 10 034 134
- DE-A1- 102019 120 498
- JP-A- 2000 306 556
- JP-A- 2012 160 260
- JP-A- 2015 115 293
- JP-A- 2016 157 518
- JP-A- 2016 540 352
- JP-A- 2020 534 403
- JP-Y2- S6 342 462
- US-A1- 2012 100 400
- US-A1- 2016 248 052
- US-A1- 2016 260 939

## Description

### TECHNICAL FIELD

The present disclosure relates to an electricity storage module.

### BACKGROUND ART

Conventionally, an electricity storage module in which multiple cylindrical electricity storage devices (e.g., batteries) are mounted has been known (see Patent Literature 1, for example). In the electricity storage module disclosed in Patent Literature 1, each electricity storage device includes a cylindrical exterior can, and a wound electrode body is housed in each exterior can.

US 2016/0260939 A1 and US 2016/0248052 A1 both disclose electricity storage modules with a cylindrical storage device, i.e. a battery cell, which is held by a sealed holder.

### PRIOR ART REFERENCE

### PATENT LITERTURE

Patent Literature 1: Japanese Unexamined Patent Application Publication No. 2014-170613

### SUMMARY OF INVENTION

### TECHNICAL PROBLEM

Electricity storage modules are sometimes used as power sources for in-vehicle use or portable terminals. Therefore, weight saving of electricity storage modules has been desired. As a method of reducing the weight of an electricity storage module, it is conceivable to wrap multiple electrode bodies with a common film exterior body while maintaining the sealing properties of the individual electrode bodies. Accordingly, an electricity storage device including multiple electrode bodies can be obtained. In this case, since the exterior can for housing each electrode body can be removed, the weight of the electricity storage module can be reduced.

For such an electricity storage module equipped with multiple electrode bodies, not only reducing its weight but also enhancing safety is required. As a result of intensive study, the inventors have found a technology for enhancing the safety of electricity storage modules.

The present disclosure has been made in view of such a situation, and a purpose thereof is to provide a technology for enhancing the safety of electricity storage modules.

### SOLUTION TO PROBLEM

One embodiment of the present disclosure relates to an electricity storage module. The electricity storage module includes an electricity storage device, and a holder that holds the electricity storage device. The electricity storage device includes multiple cylindrical electrode bodies, and a film exterior body including multiple housing parts and a sealing part. The multiple housing parts respectively wrap the multiple electrode bodies. The sealing part seals each housing part and connects the multiple housing parts to each other. The holder is bonded to the sealing part.

Another embodiment of the present disclosure also relates to an electricity storage module. The electricity storage module includes an electricity storage device, a holder that holds the electricity storage device, and a filler that is interposed between the electricity storage device and the holder and of which the thermal conductivity at a first temperature is lower than the thermal conductivity at a second temperature that is lower than the first temperature.

Optional combinations of the aforementioned constituting elements, and implementation of the present disclosure, including the expressions, in the form of methods, apparatuses, or systems may also be practiced as additional modes of the present disclosure.

### ADVANTAGEOUS EFFECTS OF INVENTION

The present disclosure can enhance the safety of electricity storage modules.

### BRIEF DESCRIPTION OF DRAWINGS

[FIG. 1] FIG. 1 is a perspective view of an electricity storage device.
[FIGS. 2] FIG. 2A is a schematic diagram of the electricity storage device viewed from an axis direction. FIG. 2B is a schematic diagram of the electricity storage device viewed from a second direction.
[FIGS. 3] FIGS. 3A-3E are process diagrams of a manufacturing method for the electricity storage device.
[FIG. 4] FIG. 4 is a perspective view of an electricity storage module according to an embodiment.
[FIG. 5] FIG. 5 is an exploded perspective view of the electricity storage module.
[FIG. 6] FIG. 6 is a perspective view of the electricity storage device and holders arranged in the second direction.
[FIGS. 7] FIGS. 7A and 7B are sectional views of part of the electricity storage module, along a plane perpendicular to the axis direction.
[FIGS. 8] FIG. 8A is a magnified view of part of a filler. FIG. 8B is a magnified view of an area indicated by a dotted line in FIG. 7A.
[FIGS. 9] FIG. 9A is a perspective view of part of a holder. FIG. 9B is a plan view of part of a holder.
[FIGS. 10] FIG. 10A is a perspective view of the electricity storage module. FIG. 10B is a sectional view of part of the electricity storage module, along a plane perpendicular to the second direction.
[FIG. 11] FIG. 11 is a perspective view of part of the electricity storage module.
[FIGS. 12] FIGS. 12A and 12B are perspective views of part of the electricity storage module.
[FIG. 13] FIG. 13 is a sectional view of part of the electricity storage module, along a plane perpendicular to a first direction.

### DESCRIPTION OF EMBODIMENTS

In the following, the present disclosure will be described based on a preferred embodiment with reference to the drawings. The embodiment is intended to be illustrative only and not to limit the present disclosure, so that it should be understood that not all of the features or combinations thereof described in the embodiment are necessarily essential to the present disclosure. Like reference characters denote like or corresponding constituting elements, members, and processes in each drawing, and repetitive description will be omitted as appropriate. Also, the scale or shape of each component shown in each drawing is defined for the sake of convenience to facilitate the explanation and is not to be regarded as limitative unless otherwise specified. When the terms "first", "second", and the like are used in the present specification or claims, such terms do not imply any order or degree of importance and are used to distinguish one configuration from another, unless otherwise specified. Further, in each drawing, part of a member less important in describing embodiments may be omitted.

### Electricity storage device

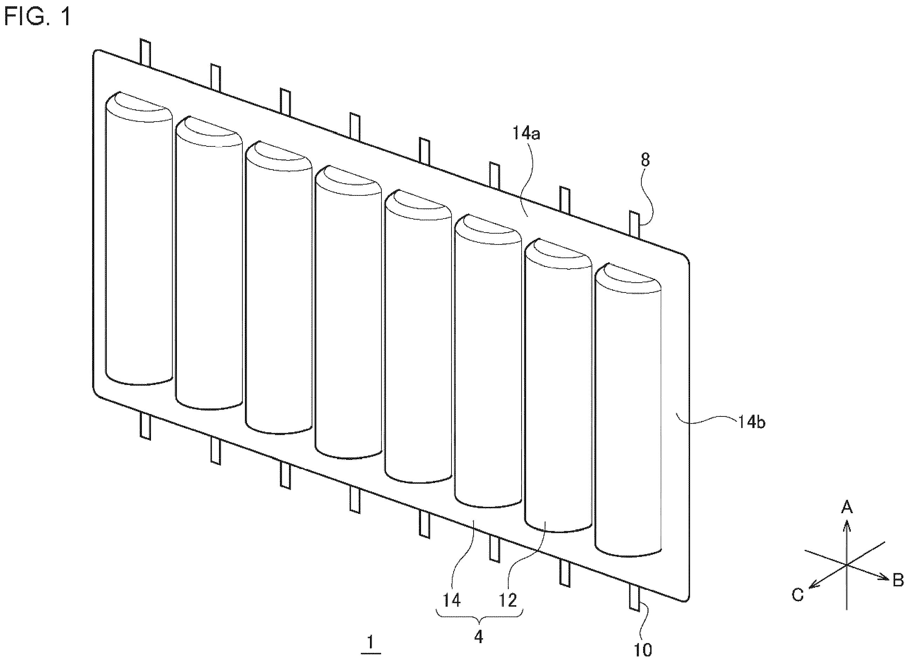

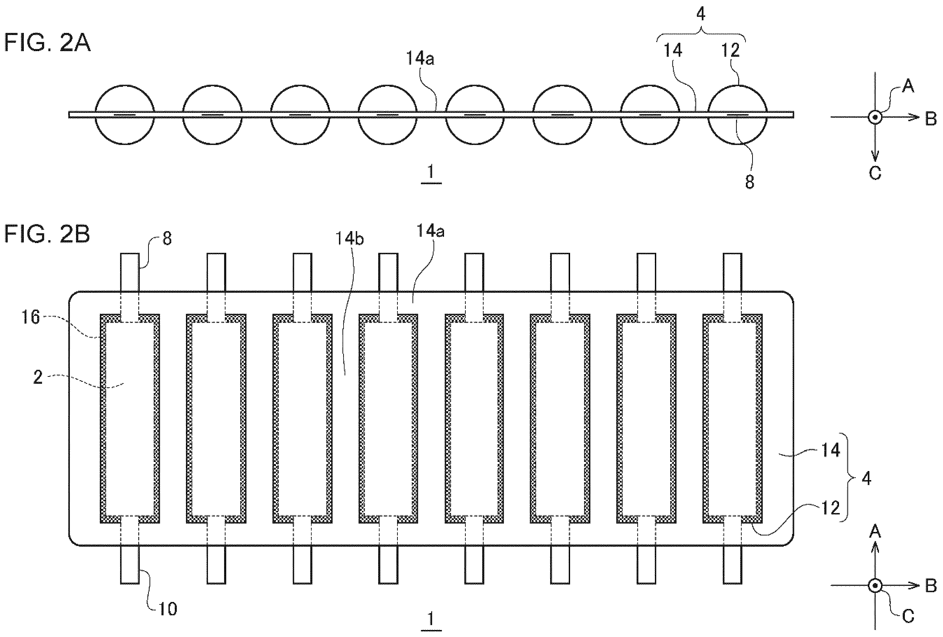

First, an electricity storage device included in an electricity storage module according to the present embodiment will be described. FIG. 1 is a perspective view of an electricity storage device 1. FIG. 2A is a schematic diagram of the electricity storage device 1 viewed from an axis direction A. FIG. 2B is a schematic diagram of the electricity storage device 1 viewed from a second direction C. FIG. 2B also illustrates the inside of a film exterior body 4, for the sake of convenience. In the present embodiment, a direction in which the axis of the spiral of an electrode body 2, or the central axis of the cylinder, extends is defined as the axis direction A, a direction in which multiple electrode bodies 2 are aligned is defined as a first direction B, and a direction intersecting the axis direction A and the first direction B is defined as a second direction C. As an example, the axis direction A, the first direction B, and the second direction C are perpendicular to each other.

The electricity storage device 1 of the present embodiment is, for example, a rechargeable secondary battery, such as a lithium-ion battery, nickel-hydrogen battery, and nickel-cadmium battery, or a capacitor such as an electric double layer capacitor. The electricity storage device 1 includes multiple electrode bodies 2 and the film exterior body 4. The electricity storage device 1 of the present embodiment includes eight electrode bodies 2; however, the number of electrode bodies 2 is not particularly limited and has only to be one or more.

Each electrode body 2 is cylindrical and has a wound structure in which a first electrode plate of band shape and a second electrode plate of band shape are laminated, with an inter-electrode separator provided therebetween, and wound in a spiral shape. As an example, the first electrode plate is a negative plate, and the second electrode plate is a positive plate. The electricity storage device 1 includes multiple electrode leads electrically connected to the electrode bodies 2. In specific, a first electrode lead 8 is electrically connected to the first electrode plate. Also, a second electrode lead 10 is electrically connected to the second electrode plate. For example, each of the first electrode lead 8 and the second electrode lead 10 has a strip shape, i.e., a rectangular shape that is long in one direction, and one end thereof is welded to a corresponding electrode plate. The multiple electrode bodies 2 are arranged in the first direction B at predetermined intervals, with the orientation thereof set such that the axis directions A of the respective electrode bodies 2 are parallel to each other. The multiple electrode bodies 2 are wrapped in the film exterior body 4 in common.

The film exterior body 4 has a laminated structure of two laminated films, for example. Each laminated film has a structure in which thermoplastic resin sheets are laminated respectively on both surfaces of a metal sheet such as an aluminum sheet, for example. The film exterior body 4 includes multiple housing parts 12 and a sealing part 14. The multiple housing parts 12 are arranged in the first direction B at predetermined intervals. Each housing part 12 is cylindrical and individually wraps and houses an electrode body 2. Each housing part 12 is constituted by a bag portion provided in the film exterior body 4. The bag portion is a portion where the two laminated films are separated from each other. Therefore, each housing part 12 protrudes from the sealing part 14 in a thickness direction of the film exterior body 4, i.e., the second direction C, along the shape of a side surface of a corresponding electrode body 2. Each housing part 12 also houses an electrolyte 16 together with an electrode body 2.

The sealing part 14 surrounds the outer circumference of each housing part 12 and seals the housing part 12. The sealing part 14 is constituted by, for example, the welded part of the thermoplastic resin sheets. The welded part is obtained by performing thermocompression bonding on the outer circumference of each bag portion of the film exterior body 4 and welding the thermoplastic resin sheets of the two laminated films to each other. The sealing part 14 seals each housing part 12 and also connects the multiple housing parts 12 to each other. The sealing part 14 includes a pair of first portions 14a, which are arranged across the housing parts 12 in the axis direction A and extend in the first direction B, and multiple second portions 14b, which are arranged alternately with the multiple housing parts 12 in the first direction B and extend in the axis direction A. The ends in the axis direction A of each second portion 14b are connected respectively to the first portions 14a. Each housing part 12 is sealed at the ends in the axis direction A by the pair of first portions 14a and at the ends in the first direction B by a pair of second portions 14b. Based on the number of housing parts 12, one or more sealing parts 14 may be provided.

In each of the first electrode leads 8 and the second electrode leads 10, an end opposite to that connected to an electrode body 2 protrudes externally from the sealing part 14. The interface between each electrode lead and the film exterior body 4 is sealed with a known sealant. In the present embodiment, the first electrode lead 8 and the second electrode lead 10 connected to each electrode body 2 protrude respectively toward opposite sides in the axis direction A. Each first electrode lead 8 protrudes on the same side.

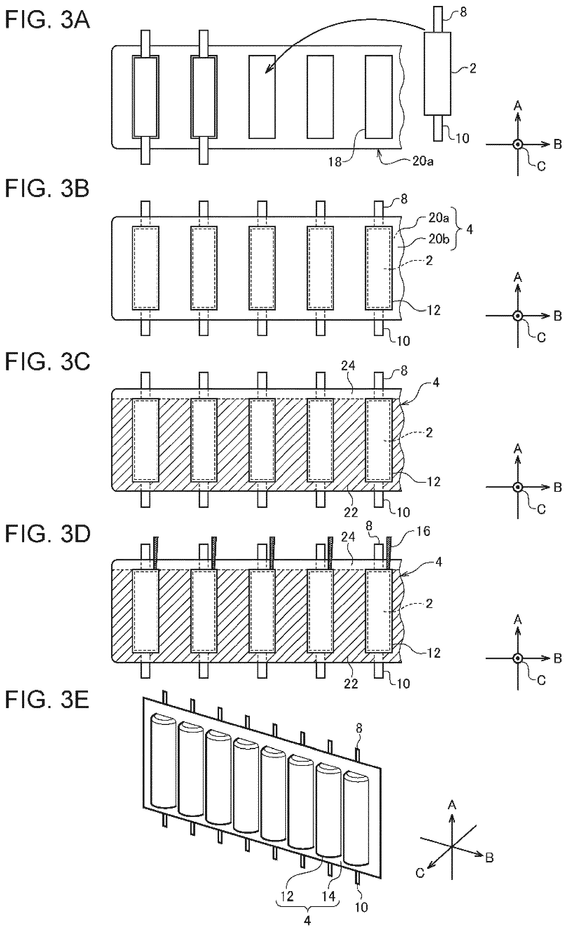

In the following, an example of a manufacturing method for the electricity storage device 1 will be described. FIGS. 3A-3E are process diagrams of a manufacturing method for the electricity storage device 1. First, as illustrated in FIG. 3A, a first laminated film 20a is prepared. In the first laminated film 20a, multiple semicylindrical concavities 18 are formed in advance. The multiple concavities 18 are formed by performing publicly-known processing, such as press processing, on the first laminated film 20a, for example. In each concavity 18, an electrode body 2 is placed. To each electrode body 2, a first electrode lead 8 and a second electrode lead 10 are connected in advance. On the first electrode lead 8 and the second electrode lead 10, a sealant, not illustrated, is provided.

Subsequently, as illustrated in FIG. 3B, a second laminated film 20b is overlaid on the first laminated film 20a, so as to form the film exterior body 4. In the second laminated film 20b, semicylindrical concavities 18 are provided at positions facing the respective concavities 18 of the first laminated film 20a. Accordingly, when the first laminated film 20a and the second laminated film 20b are overlapped, a housing part 12 is formed by a pair of concavities 18. The method for forming the concavities 18 on the second laminated film 20b is the same as the method for forming the concavities 18 on the first laminated film 20a. With the electrode bodies 2 housed in the housing parts 12, the tip of each first electrode lead 8 and the tip of each second electrode lead 10 protrude outside from the film exterior body 4.

Subsequently, as illustrated in FIG. 3C, part of the film exterior body 4 is subjected to thermocompression bonding, so as to form a welded part 22. The portion of the film exterior body 4 that is not subjected to thermocompression bonding becomes a non-welded part 24. The non-welded part 24 is disposed such as to connect each housing part 12 and the outside of the film exterior body 4. In the present embodiment, the non-welded part 24 is disposed such as to connect, among the four sides of each housing part 12, the side where the first electrode lead 8 protrudes and the outside of the film exterior body 4. The remaining three sides of each housing part 12 are surrounded by the welded part 22. The interface between the film exterior body 4 and each second electrode lead 10 is sealed with the sealant.

Thereafter, as illustrated in FIG. 3D, the electrolyte 16 is injected into each housing part 12 through the non-welded part 24. After the injection of the electrolyte 16, the non-welded part 24 is also subjected to thermocompression bonding, as illustrated in FIG. 3E. As a result, the sealing part 14 that surrounds the entire circumference of each housing part 12 is formed. The interface between the film exterior body 4 and each first electrode lead 8 is sealed with the sealant. Through the process set forth above, the electricity storage device 1 can be obtained.

The manufacturing method for the electricity storage device 1 is not limited to that described above. For example, a single laminated film having twice the length of the electricity storage device 1 may be used and folded in half to wrap each electrode body 2. Also, when the required amount of the electrolyte 16 is small, the electrolyte 16 may be infiltrated in advance into the inter-electrode separator, which can omit the process of injection of the electrolyte 16 shown in FIG. 3D. In this case, in the thermocompression bonding process shown in FIG. 3C, the entire circumference of each housing part 12 is subjected to thermocompression bonding to form the sealing part 14.

### Electricity storage module

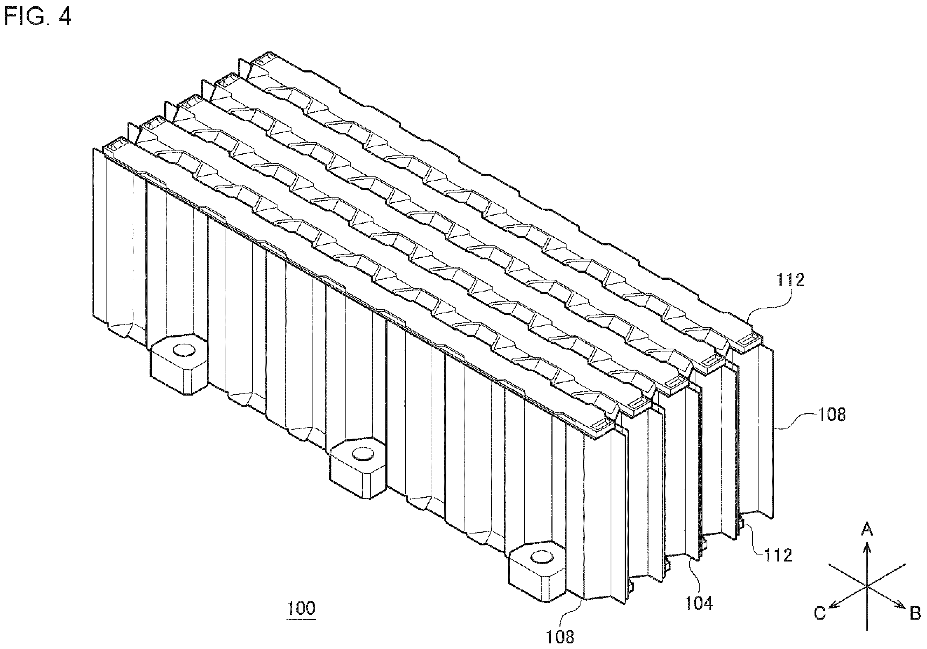

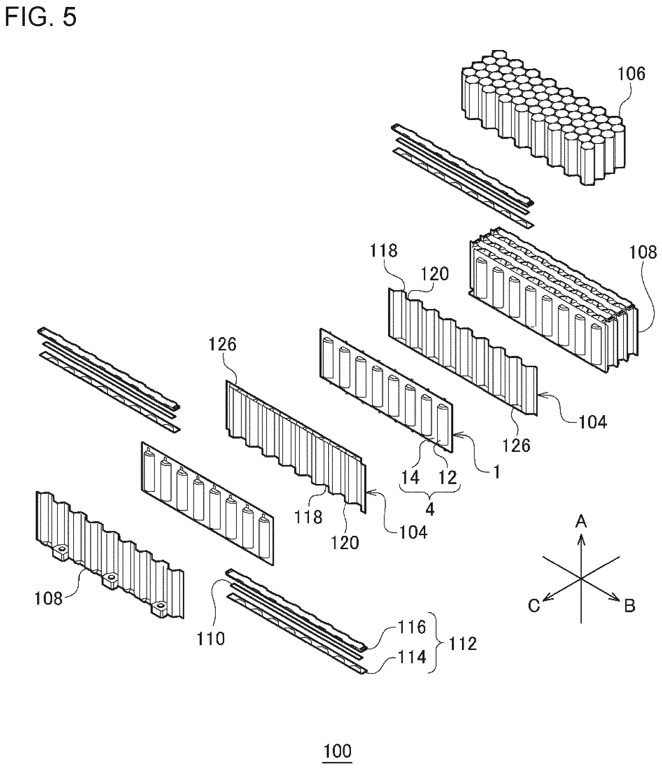

The electricity storage device 1 is incorporated into an electricity storage module 100 according to the present embodiment. FIG. 4 is a perspective view of the electricity storage module 100 according to the embodiment. FIG. 5 is an exploded perspective view of the electricity storage module 100. In FIGS. 4 and 5, the illustration of reinforcement plates 128 is omitted. The electricity storage module 100 includes the electricity storage device 1 and a holder 104. The electricity storage module 100 of the present embodiment includes multiple electricity storage devices 1 and multiple holders 104. Although the illustrated electricity storage module 100 includes eight electricity storage devices 1, the number of electricity storage devices 1 is not particularly limited.

The multiple electricity storage devices 1 are arranged in the second direction C, with the orientation thereof set such that the housing parts 12 are arranged in the first direction B. Two electricity storage devices 1 adjacent in the second direction C are arranged to be displaced from each other in the first direction B such that, between the axial centers of two adjacent electrode bodies 2 in one electricity storage device 1, the axial center of an electrode body 2 in the other electricity storage device 1 is positioned. In other words, into a space between two housing parts 12 in one electricity storage device 1, a housing part 12 in the other electricity storage device 1 fits. This can reduce the dimension in the second direction C of the electricity storage module 100.

The multiple holders 104 are arranged alternately with the multiple electricity storage devices 1 in the second direction C. The holders 104 extend in the first direction B, i.e., are long in the first direction B. Since the electricity storage devices 1 and the holders 104 are assembled in the second direction C, the electricity storage devices 1 are held by the holders 104. This can increase the rigidity of the electricity storage devices 1. As an example, the holders 104 are made of a metal, such as aluminum, an aluminum alloy, or steel. This allows the holders 104 to have desired rigidity and thermal conductivity. Also, the holders 104 may be made of resin, as long as rigidity and thermal conductivity higher than or equal to a predetermined level can be obtained. The electricity storage module 100 also includes a filler 106 interposed between an electricity storage device 1 and a holder 104. The filler 106 will be detailed later.

The electricity storage module 100 also includes a pair of end plates 108. The multiple electricity storage devices 1 and the multiple holders 104 alternately aligned in the second direction C are constrained by the pair of end plates 108. The electricity storage module 100 is fixed to a battery pack, not illustrated, by screw fastening or the like, via an end plate 108.

The electricity storage module 100 also includes a bus bar 110, which is a current collector plate, that electrically connects multiple electrode leads. With the first electrode leads 8 and the second electrode leads 10 of each electricity storage device 1 electrically connected to bus bars 110, the multiple electricity storage devices 1 are electrically connected to each other. For example, each electrode lead is joined to a bus bar 110 by a publicly-known joining process, such as laser welding. The manner of electrical connection of the electrode bodies 2 and the manner of electrical connection of the electricity storage devices 1 are not particularly limited. In each electricity storage device 1, the multiple electrode bodies 2 may be connected in series or may be connected in parallel, or series and parallel connections may be combined. Also, the multiple electricity storage devices 1 may be connected in series or may be connected in parallel, or series and parallel connections may be combined.

The electricity storage module 100 also includes multiple insulation members 112 extending in the first direction B. Each insulation member 112 includes a support plate 114 and a lid 116. The support plate 114 and the lid 116 each extend in the first direction B. A bus bar 110 is wrapped by the support plate 114 and the lid 116. The insulation members 112 will be detailed later.

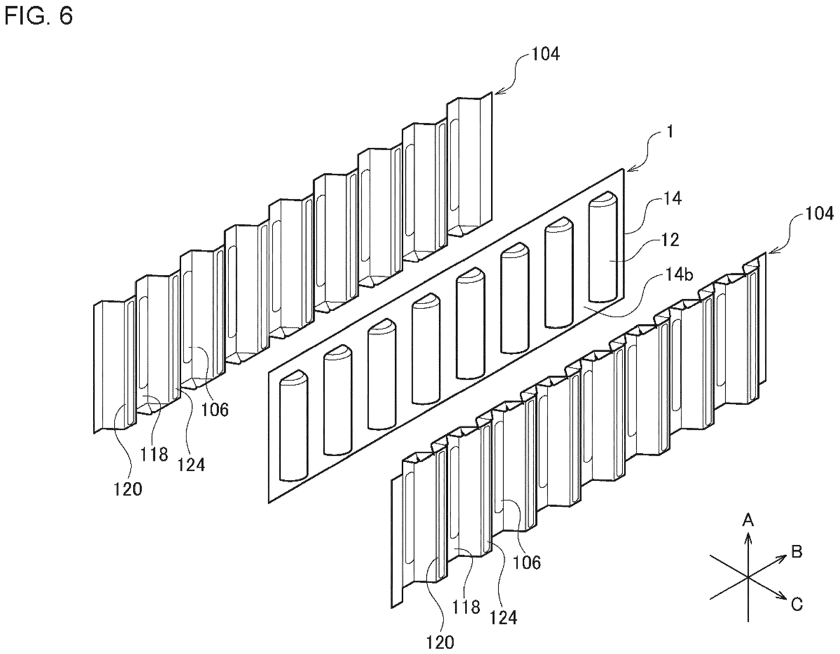

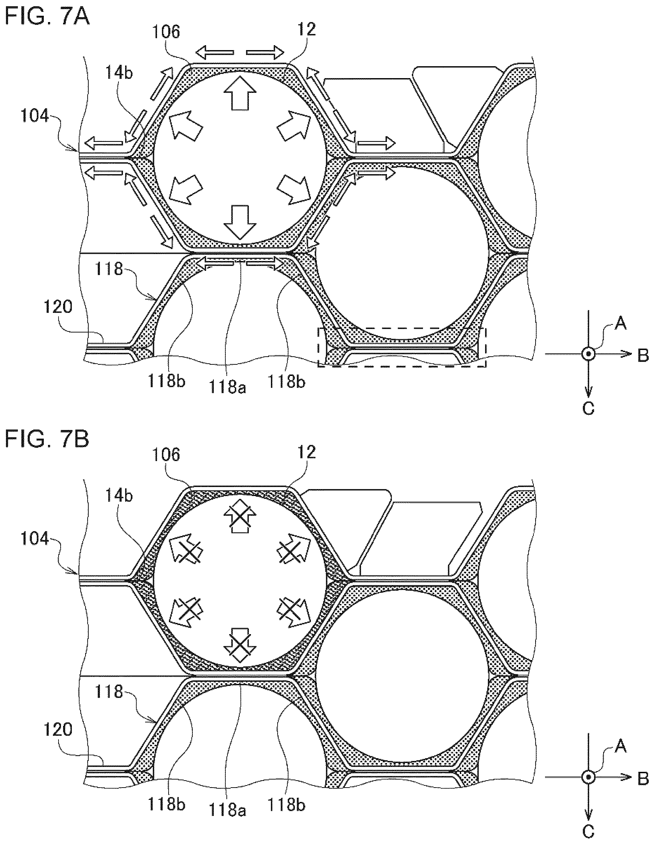

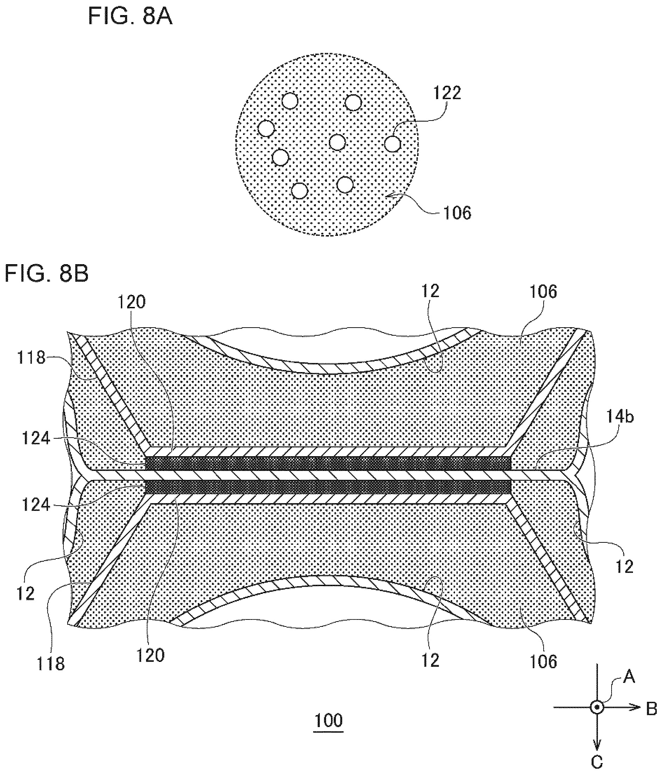

FIG. 6 is a perspective view of an electricity storage device 1 and holders 104 arranged in the second direction C. FIGS. 7A and 7B are sectional views of part of the electricity storage module 100, along a plane perpendicular to the axis direction A. FIG. 8A is a magnified view of part of the filler 106. FIG. 8B is a magnified view of an area indicated by a dotted line in FIG. 7A. In FIGS. 7A, 7B, and 8B, illustration of the inside of each housing part 12 is omitted.

As illustrated in FIG. 6, the holders 104 of the present embodiment each have a plate shape extending in the first direction B. Each holder 104 includes multiple recesses 118 arranged in the first direction B, and multiple flat parts 120 connecting adjacent recesses 118. Each holder 104 of the present embodiment has a corrugated plate shape in which concavities and convexities are alternately arranged in the first direction B. In other words, the multiple recesses 118 and the multiple flat parts 120 are alternately arranged in the first direction B when viewed from either main surface side. Also, the flat parts 120 on one main surface side constitute bottom parts 118a of the recesses 118 on the other main surface side (see FIG. 7A, for example).

Accordingly, each housing part 12 of the electricity storage devices 1 arranged on both sides of a holder 104 can be fitted to the holder 104. This can further enhance the stability of each electricity storage device 1 in the electricity storage module 100. Each holder 104 having such a structure can be formed by, for example, performing press processing on a single metal plate. Each holder 104 may be a plate having a thickness such that the bottom part 118a of a recess 118 on one main surface side does not project on the other main surface side, from the bottom part 118a of a recess 118 on the other main surface side. In other words, in a thickness direction of each holder 104, i.e., in the second direction C, the extending range of a recess 118 provided on one main surface and the extending range of a recess 118 provided on the other main surface may not overlap.

### Filler

Each recess 118 has a groove shape long in the axis direction A. Before the electricity storage devices 1 and the holders 104 are assembled, the filler 106 is applied to a wall surface of each recess 118. When the electricity storage devices 1 and the holders 104 are assembled, each housing part 12 fits into a corresponding recess 118. Therefore, as shown in FIGS. 7A and 7B, the filler 106 is crushed and deformed by a housing part 12 and a recess 118 and spreads into a gap between the housing part 12 and the recess 118.

The distance between a recess 118 of which the inner surface is constituted by multiple planes, specifically the bottom part 118a and a pair of inclined parts 118b described later, and a corresponding housing part 12, which has a substantially circular cross section, varies depending on the location. In particular, at the boundary portion between the bottom part 118a and an inclined part 118b, the distance from the housing part 12 becomes longest. The filler 106 is disposed at least between the boundary of the bottom part 118a and an inclined part 118b, and the housing part 12. The boundary portion can be filled with a larger amount of filler 106 than other portions. Thus, by filling each recess 118 constituted by multiple planes with the filler 106, the filling amount of the filler 106 can be increased locally, without increasing the space in the recess 118 more than necessary. This enables efficient heat absorption in the electricity storage devices 1. Also, the filler 106 may be interposed between a flat part 120 and a sealing part 14, more specifically between a flat part 120 and a second portion 14b. With such a configuration, the filling amount of the filler 106 between a pair of holders 104 can be increased. Also, when the filler 106 has adhesiveness, the fixing strength of the electricity storage devices 1 and the holders 104 can be increased. Also, since the contact area between each holder 104 and the filler 106 is increased, heat exhaust from the electricity storage devices 1 to the holders 104 can be promoted. Further, the filler 106 may cover an end face in the axis direction A of each housing part 12. With the filler 106 covering an end face of a housing part 12, the end face of the housing part 12 can be protected from gases, flames, and other emissions from other electricity storage devices 1.

The filler 106 of the present embodiment has thixotropy. Thixotropy is a property of becoming liquid as the viscosity decreases when subjected to stress and becoming solid as the viscosity increases when left still. The filler 106 may preferably have blend initial viscosity, or initial viscosity, of 10,000 mPa·s or greater. Since the filler 106 has thixotropy, before the electricity storage devices 1 and the holders 104 are assembled, the shape of the filler 106 can be easily maintained on the wall surface of each recess 118. This prevents the filler 106 from dripping from each recess 118. On the other hand, when the electricity storage devices 1 and the holders 104 are assembled, the filler 106 is easily deformed under stress. This facilitates the filling of the filler 106 between a housing part 12 and a recess 118, without unfilled space.

The filler 106 also has the property that the thermal conductivity at a first temperature is lower than the thermal conductivity at a second temperature, which is lower than the first temperature. That is, the thermal conductivity of the filler 106 decreases as the temperature increases. The first temperature may be the temperature when each electrode body 2 falls into an abnormal state and may be 100 degrees C or higher, for example. The second temperature may be the temperature when each electrode body 2 is in a normal state, i.e., when the charge/discharge state of each electrode body 2 is within the design range, and may be -30 degrees C or higher and 60 degrees C or lower, for example. Also, the thermal conductivity of the filler 106 at the first temperature may preferably be 0.1 W/m·K or less, and the thermal conductivity of the filler 106 at the second temperature may preferably be 0.5 W/m·K or greater. The difference between the thermal conductivity at the first temperature and the thermal conductivity at the second temperature may preferably be 0.5 W/m·K or greater. The first temperature, second temperature, and thermal conductivity at each of the temperatures may be appropriately determined based on experiments, simulations, and the like conducted by the designer.

When each electrode body 2 is in a normal state and the filler 106 is at the second temperature, the filler 106 promotes the transfer of heat from each electrode body 2 to holders 104 using its own thermal conductivity, as shown in FIG. 7A. Preferably, the thermal conductivity of each holder 104 is higher than the thermal conductivity of the filler 106 at the second temperature. With this configuration, when the temperature of an electricity storage device 1 in the normal state increases, the heat can be quickly dissipated within the electricity storage module 100 through the filler 106 and holders 104. On the other hand, when an electrode body 2 falls into an abnormal state and the filler 106 reaches the first temperature, the thermal conductivity of the filler 106 decreases, which suppresses the transfer of heat from the electrode body 2 to holders 104, as shown in FIG. 7B. Preferably, the thermal conductivity of the filler 106 decreases reversibly. The filler 106 that has reached the first temperature may have some heat transferability. In this case, the heat of the electrode body 2 that has fallen into an abnormal state can be dissipated through the holders 104.

An example of components of the filler 106 that has thixotropy and of which the thermal conductivity changes with temperature as described above may be urethane or silicon as the base material with a metal hydroxide blended therewith. It is desirable that the content of the metal hydroxide is 50% or more and 90% or less in the mass ratio with respect to the total mass of the materials constituting the filler 106. The metal hydroxide releases water vapor through thermal decomposition when exposed to high temperatures. Accordingly, the metal hydroxide exhibits an endothermic effect and changes into a metal oxide having heat resistance and insulation properties. Furthermore, when the base material such as urethane and silicon decomposes and volatilizes at a high temperature, a porous structure is formed in the metal oxide, which exhibits a heat insulating effect. That is, the thermal conductivity is greatly reduced. Although it is conceivable that it is heated to 800 degrees C or higher due to thermal runaway of the battery, the metal oxide with a porous structure thus formed can maintain the thermal insulation properties even at such a high temperature. Examples of such a metal hydroxide include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃). For example, in the case of aluminum hydroxide, hydrolytic decomposition occurs at 200 degrees C or higher, and aluminum hydroxide is decomposed into about 66% Al₂O₃ and about 34% water vapor, which exhibits an endothermic reaction. By this reaction, the heat generated by the battery cell that has caused thermal runaway can be absorbed, and the amount of heat transferred to the holders 104 can be reduced. Thereafter, the base material decomposes and volatilizes at a high temperature, so that porous aluminum oxide will exhibit a heat insulating effect.

Also, as illustrated in FIG. 8A, the filler 106 of the present embodiment may contain multiple hollow glass beads 122. The hollow glass beads 122 are more flame resistant than the constituent materials of the filler 106. Accordingly, even when the constituent materials of the filler 106 is burned, the hollow glass beads 122 are likely to remain between a housing part 12 and a recess 118. Such remaining hollow glass beads 122 can prevent thermal connection between the housing part 12 of an electrode body 2 that has fallen into an abnormal state and a holder 104. Further, because of the hollow shape, the hollow glass beads 122 are light. Therefore, the weight of the electricity storage module 100 can be reduced.

### Adhesive

As illustrated in FIG. 6, each flat part 120 extends parallel to a sealing part 14. Before the electricity storage devices 1 and the holders 104 are assembled, an adhesive 124 is applied to each flat part 120. As the adhesive 124, a publicly-known insulating adhesive or the like can be used. When the electricity storage devices 1 and the holders 104 are assembled, each second portion 14b of the sealing parts 14 and a corresponding flat part 120 are pressed against each other. Therefore, as shown in FIG. 8B, the adhesive 124 is crushed and deformed by a second portion 14b and a flat part 120, and a layer of the adhesive 124 is formed between the second portion 14b and the flat part 120. Each holder 104 is bonded to a sealing part 14 by the adhesive 124 to hold the electricity storage device 1. This can increase the rigidity of each electricity storage device 1.

Also, at least one or some of the electricity storage devices 1 are each sandwiched by two holders 104 adjacent thereto. In this case, each second portion 14b is sandwiched in the second direction C by a pair of flat parts 120. Also, each flat part 120 is bonded to a second portion 14b by the adhesive 124. This can further increase the rigidity of the electricity storage module 100. As with the filler 106, the adhesive 124 may also preferably have thixotropy. Also, as with the filler 106, the adhesive 124 may also have the property that the thermal conductivity decreases as the temperature increases.

### Honeycomb structure

As illustrated in FIGS. 7A and 7B, each recess 118 of the present embodiment has a trapezoidal prism shape, in other words, a cross section thereof perpendicular to the axis direction A is trapezoidal. More specifically, each recess 118 includes a bottom part 118a extending in the first direction B and a pair of inclined parts 118b extending diagonally from both ends in the first direction B of the bottom part 118a. The pair of inclined parts 118b are equal in length and angle with respect to the bottom part 118a, so that each recess 118 has an isosceles trapezoidal prism shape. An end of each inclined part 118b opposite to the bottom part 118a is connected to a flat part 120. Thus, each inclined part 118b connects a bottom part 118a and a flat part 120. Two holders 104 adjacent in the second direction C are aligned such that the interior spaces of their respective recesses 118 face each other. Therefore, multiple hexagonal prism-shaped spaces that each surround a housing part 12 are formed. The electricity storage module 100 has a honeycomb structure in which the multiple hexagonal prism-shaped spaces are arranged. This can further increase the rigidity of the electricity storage module 100.

### Click portions and reinforcement plates

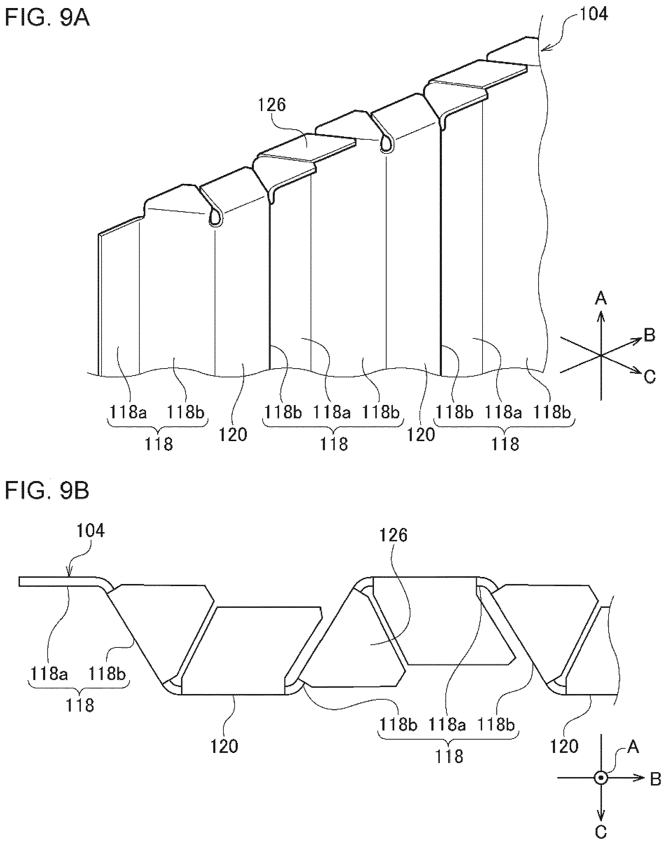

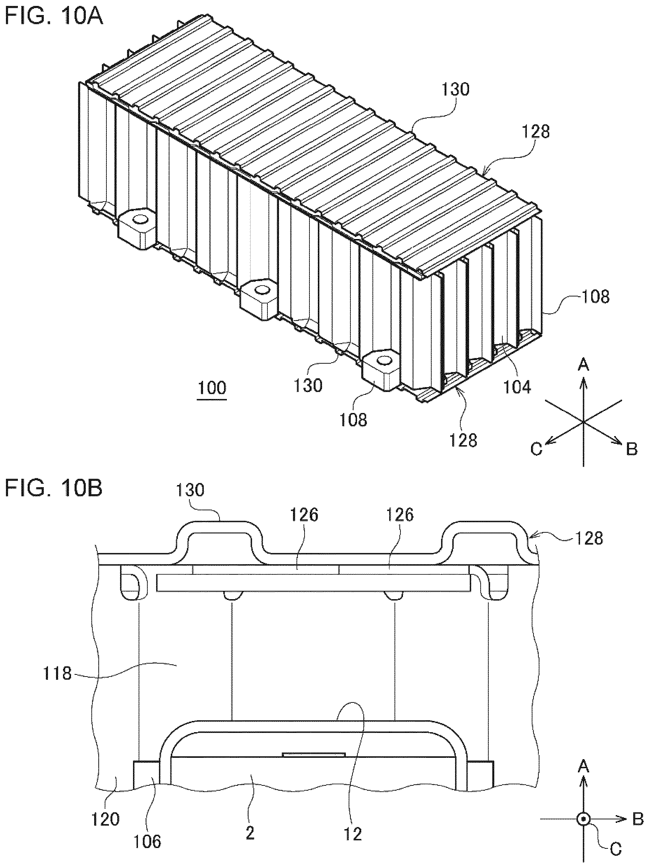

FIG. 9A is a perspective view of part of a holder 104. FIG. 9B is a plan view of part of a holder 104. FIG. 10A is a perspective view of the electricity storage module 100. FIG. 10B is a sectional view of part of the electricity storage module 100, along a plane perpendicular to the second direction C. As illustrated in FIGS. 9A and 9B, each holder 104 of the present embodiment includes multiple click portions 126 at an end in the axis direction A of the holder 104. Each click portion 126 is bent toward an adjacent electricity storage device 1 and extends in a direction intersecting the axis direction A. Each click portion 126 blocks an end in the axis direction A of the internal space of a recess 118.

Each holder 104 of the present embodiment has the click portions 126 only at one end in the axis direction A (see FIG. 6). Also, two adjacent holders 104 are postured such that the respective ends provided with the click portions 126 are positioned opposite to each other. Therefore, when the electricity storage module 100 is viewed from the axis direction A, multiple rows of click portions 126 extending in the first direction B are arranged at intervals in the second direction C.

In FIGS. 6, 9A, and 9B, two click portions 126 having different shapes are provided for one recess 118. However, the configuration is not limited thereto, and three or more click portions 126 may be provided for one recess 118. Alternatively, a click portion 126 having the same shape as or a similar shape to the shape of a recess 118 viewed from the axis direction A may be provided. Also, a cutout may be provided in a bent portion in each holder 104, such as the boundary between a bottom part 118a and an inclined part 118b, and the boundary between a recess 118 and a click portion 126. Such a cutout facilitates processing for forming a bottom part 118a and an inclined part 118b or processing for forming a click portion 126.

Also, as shown in FIGS. 10A and 10B, the electricity storage module 100 of the present embodiment includes a pair of reinforcement plates 128. The reinforcement plates 128 as an example are made of: a metal such as aluminum, an aluminum alloy, and steel; a thermoplastic resin such as polypropylene (PP), polybutylene terephthalate (PBT), polycarbonate (PC), and Noryl (registered trademark) resin (modified PPE); a fiber reinforced plastic (FRP) such as a carbon fiber reinforced plastic (CFRP) and a glass fiber reinforced plastic (GFRP); or the like.

The pair of reinforcement plates 128 sandwich, in the axis direction A, an alignment constituted by multiple electricity storage devices 1, multiple holders 104, and a pair of end plates 108. Each end plate 108 can be fixed to the alignment by publicly-known fixing means. The reinforcement plates 128 are thereby connected directly or indirectly to the multiple holders 104. The reinforcement plates 128 of the present embodiment are supported by multiple click portions 126. In other words, the click portions 126 are used as a support structure for the reinforcement plates 128. Also, each reinforcement plate 128 of the present embodiment includes multiple ribs 130 arranged at predetermined intervals in the first direction B. Each rib 130 is provided on a main surface of a reinforcement plate 128 facing opposite to the alignment and extends in the aligning direction of the electricity storage devices 1 and the holders 104, i.e., in the second direction C. Also, on the surface of each rib 130 facing the alignment, a groove extending in the second direction C is provided.

By providing the reinforcement plates 128 for the alignment, the rigidity of the electricity storage module 100 can be increased. Also, by transferring heat from each electricity storage device 1 to the reinforcement plates 128, each electricity storage device 1 can be cooled. Also, by connecting or incorporating cooling piping to the reinforcement plates 128, the efficiency of cooling the electricity storage devices 1 can be further improved. In addition, if the temperature of an electrode body 2 rises excessively and if a gas is ejected from a housing part 12 and a flame is generated by the gas, the diffusion of the gas and flame can be suppressed. This can also suppress the spread of the fire to other housing parts 12.

Since the reinforcement plates 128 have the ribs 130, the rigidity of the reinforcement plates 128 and thus the electricity storage module 100 can be further increased. Also, the groove provided in each rib 130 can function as a duct through which gas ejected from each housing part 12 flows. Meanwhile, only a single reinforcement plate 128 may be provided, or the ribs 130 may not be provided.

The diffusion of a gas or flame ejected from a housing part 12 can be suppressed also by the click portions 126. More specifically, the diffusion of a gas or flame can be suppressed by the click portions 126 that overlap, in the axis direction A, with the housing part 12 from which the gas or flame is ejected. Also, when the reinforcement plates 128 are not provided, a gas or flame ejected from a housing part 12 may pass through a gap between click portions 126 or may crush a click portion 126 to reach a battery pack (not illustrated). When the gas or flame bounces off the battery pack, the gas or flame that has bounced can be prevented from reaching another housing part 12 by a click portion 126 that overlaps the another housing part 12 in the axis direction A.

### Insulation member

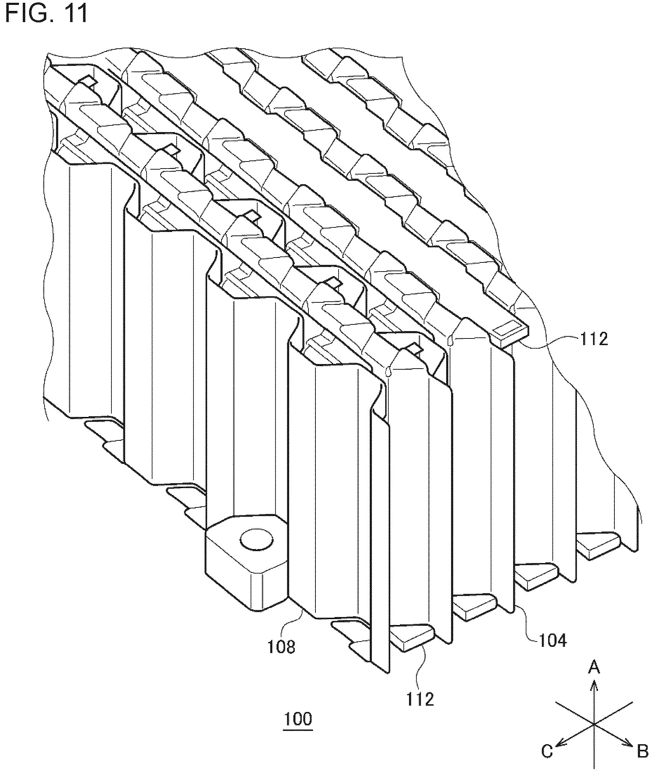

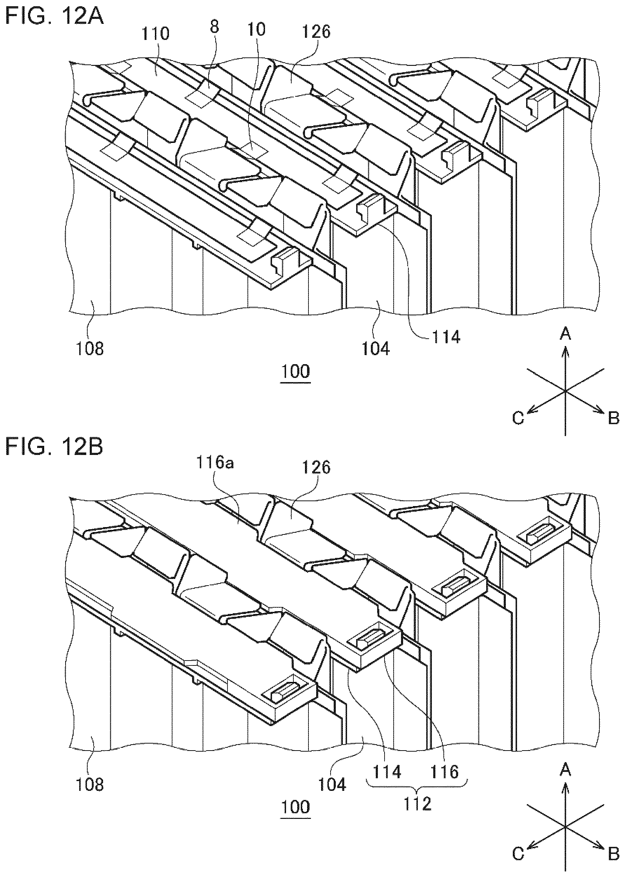

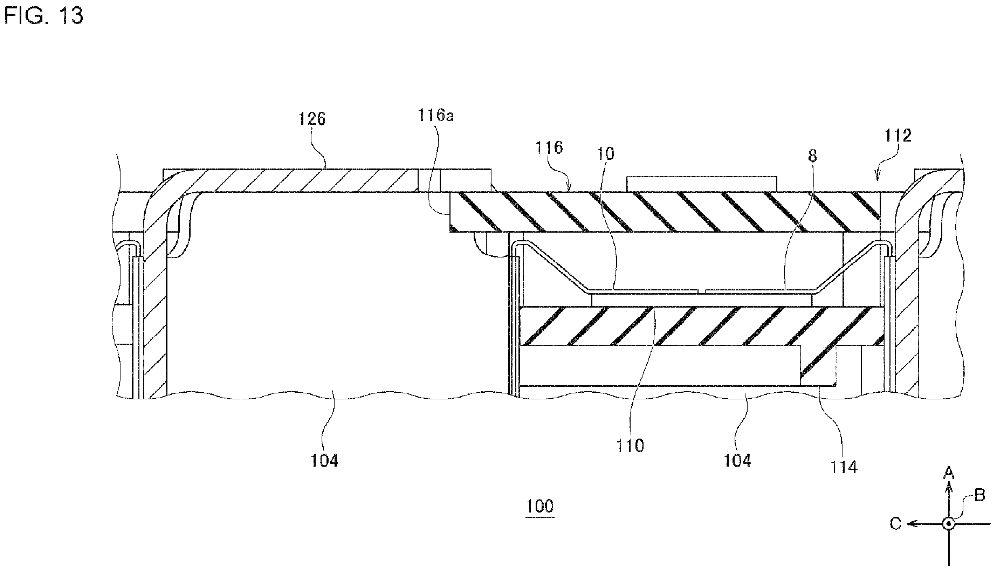

FIGS. 11, 12A, and 12B are perspective views of part of the electricity storage module 100. FIG. 13 is a sectional view of part of the electricity storage module 100, along a plane perpendicular to the first direction B. FIG. 11 illustrates a state in which the insulation members 112 have been partly removed. Also, FIG. 12A illustrates a state in which the lids 116 have been removed.

The electricity storage module 100 includes the insulation members 112 as described above. Each insulation member 112 includes the support plate 114 and the lid 116. As illustrated in FIG. 11, each insulation member 112 is placed on an edge of a holder 104 where the click portions 126 are not provided. Therefore, when the electricity storage module 100 is viewed from the axis direction A, rows of click portions 126 extending in the first direction B and the insulation members 112 are alternately arranged in the second direction C. The insulation members 112 may be made of a resin having insulation properties, for example. Examples of the resin that the insulation members 112 are made of include: a thermoplastic resin such as polypropylene (PP), polybutylene terephthalate (PBT), polycarbonate (PC), and Noryl (registered trademark) resin (modified PPE); and a fiber reinforced plastic (FRP) such as a carbon fiber reinforced plastic (CFRP) and a glass fiber reinforced plastic (GFRP).

As shown in FIG. 12A, a support plate 114 is first placed on a holder 104. On the support plate 114, a bus bar 110 is placed. Also, the electrode leads of the two electricity storage devices 1 arranged across the bus bar 110 when viewed from the axis direction A are joined to the bus bar 110 on the support plate 114. Further, as shown in FIG. 12B, a lid 116 is attached to the support plate 114. Accordingly, the bus bar 110 on the support plate 114 is covered with the lid 116. The lid 116 is fixed to the support plate 114 using a publicly-known fixing method, such as lance engagement. Also, the lid 116 includes multiple protrusions 116a protruding toward a holder 104, more specifically toward the internal spaces of recesses 118, when viewed from the axis direction A.

As illustrated in FIG. 13, each insulation member 112 is interposed between multiple electrode leads and a holder 104. In specific, each support plate 114 is interposed between the holder 104 on which the insulation member 112 is placed, and the first electrode leads 8 and second electrode leads 10. The support plate 114 is also interposed between the holder 104 and the bus bar 110. Meanwhile, the protrusions 116a of each lid 116 enter below the click portions 126 of a holder 104 adjacent to the holder 104 on which the insulation member 112 is placed. Thus, the lid 116 is interposed between the click portions 126, and the first electrode leads 8 and second electrode leads 10. The lid 116 is also interposed between the click portions 126 and the bus bar 110. These can prevent the electrical connection between the electrode leads and bus bar 110, and the holder 104, i.e., can insulate them from each other. The protrusions 116a and the click portions 126 also have a function to block gases and flames ejected from the housing parts 12.

As described above, the electricity storage module 100 according to the present embodiment includes the holders 104 that hold the electricity storage devices 1. By holding the electricity storage devices 1 in the holders 104, the rigidity of the electricity storage module 100 can be increased. Also, by the endothermic effect of the holders 104, each electrode body 2 can be cooled.

The electricity storage module 100 also includes the filler 106 interposed between each electricity storage device 1 and holders 104. By filling the gaps between each electricity storage device 1 and holders 104 with the filler 106, heat transfer from each electrode body 2 to the holders 104 can be promoted. Each electrode body 2 can be cooled also by the endothermic effect of the filler 106 itself. Also, the posture of each electricity storage device 1 can be further stabilized. Therefore, the electrical connection state between each electricity storage device 1 and a bus bar 110 can be maintained more stably, and damage to each electricity storage device 1 and the like can be further prevented. This can improve the power generation performance and safety of the electricity storage module 100.

The filler 106 has a property of decreasing thermal conductivity as the temperature increases. Accordingly, when each electrode body 2 is in a normal state, the heat of each electrode body 2 can be actively transferred to holders 104 via the filler 106. As a result, the temperature imbalance between the electrode bodies 2 can be reduced in the entire electricity storage module 100. Also, when an electrode body 2 falls into an abnormal state and reaches the first temperature, the filler 106 can suppress the transfer of heat from the electrode body 2 to holders 104. As a result, sequential spread of thermal runaway of the electrode body 2 to other electrode bodies 2 can be prevented.

Therefore, with the electricity storage module 100 of the present embodiment, it is possible to achieve both cooling of the electrode bodies 2 during normal conditions and suppression of thermal diffusion during abnormal conditions, thereby enhancing the safety of the electricity storage module 100. The effect of the filler 106 as described above can be enjoyed not only when an electricity storage device 1 in which multiple electrode bodies 2 are sealed with a film exterior body 4 is held by holders 104, but also when multiple electricity storage devices in each of which an electrode body 2 is housed in an exterior can are held by holders 104.

The filler 106 of the present embodiment contains the hollow glass beads 122. This can reduce the weight of the filler 106 and thus the electricity storage module 100. Also, in the case where an electrode body 2 falls into an abnormal state, the heat insulating effect of the filler 106 can be maintained more easily. Further, the filler 106 of the present embodiment has thixotropy. This can improve the ease of assembly of the electricity storage module 100. Also, the reliability and the yield during the manufacture of the electricity storage module 100 can be improved.

Each electricity storage device 1 of the present embodiment has a pouch structure in which multiple electrode bodies 2 are housed in a film exterior body 4. Accordingly, compared to the case where each electrode body 2 is individually sealed in an exterior can, the weight of the electricity storage module 100 can be reduced. The number of electrode bodies 2 and the number of housing parts 12 included in an electricity storage device 1 may also be one. Also, each holder 104 of the present embodiment is bonded to the sealing part 14 of an electricity storage device 1 to hold the electricity storage device 1. Each electricity storage device 1 is long in the first direction B, and the film exterior body 4 thereof is highly flexible. Therefore, each electricity storage device 1 is easily bent. However, by bonding a holder 104 to the sealing part 14, the electricity storage device 1 can be held more stably. Therefore, the rigidity of the electricity storage module 100 can be increased, and thus the safety of the electricity storage module 100 can be enhanced. Further, since this increased rigidity facilitates making the holders 104 thinner, further weight reduction of the electricity storage module 100 can be expected.

Also, in at least one or some of the electricity storage devices 1, holders 104 are bonded respectively to both sides of the sealing part 14. This can further improve the rigidity of the electricity storage module 100. Also, in the present embodiment, hexagonal prism-shaped spaces accommodating the respective housing parts 12 are arranged, forming a honeycomb-shaped structure for holding the electricity storage devices. This can further improve the rigidity of the electricity storage module 100.

Also, each holder 104 of the present embodiment includes multiple click portions 126, and, when viewed from the axis direction A, part of each hexagonal prism-shaped space is blocked by click portions 126. This can reduce the risk that, when a gas or flame is ejected from a housing part 12, the gas or flame diffuses and damages other housing parts 12. Therefore, the safety of the electricity storage module 100 can be further enhanced. Also, the electricity storage module 100 of the present embodiment includes the reinforcement plates 128 connected to the holders 104. This can improve the rigidity of the electricity storage module 100 and also can improve the heat dissipation of each electricity storage device 1. Further, when a gas or flame is ejected from a housing part 12, the spread of fire to other housing parts 12 can be suppressed.

The electricity storage module 100 of the present embodiment includes the insulation members 112 that each are interposed between multiple electrode leads and a holder 104. This can prevent a short circuit therebetween, thereby further enhancing the power generation performance and safety of the electricity storage module 100. Also, when viewed from the axis direction A, the hexagonal prism-shaped spaces are partly blocked by the insulation members 112. Therefore, when a gas or flame is ejected from a housing part 12, the spread of fire to other housing parts 12 can be suppressed. Also, in the present embodiment, a bus bar 110 is placed on a support plate 114 and covered with a lid 116. This can prevent a short circuit of a bus bar 110 and a holder 104, thereby further enhancing the power generation performance and safety of the electricity storage module 100. Also, since each insulation member 112 is used as a support member for a bus bar 110, the number of parts in the electricity storage module 100 can be reduced.

An embodiment of the present disclosure has been described in detail. The abovementioned embodiment merely describes a specific example for carrying out the present disclosure.

### INDUSTRIAL APPLICABILITY

The present disclosure is applicable to electricity storage modules.

### REFERENCE SIGNS LIST

- 1: electricity storage device
- 2: electrode body
- 4: film exterior body
- 12: housing part
- 14: sealing part
- 100: electricity storage module
- 104: holder
- 106: filler
- 110: bus bar
- 112: insulation member
- 114: support plate
- 116: lid
- 118: recess
- 120: flat part
- 122: hollow glass bead
- 124: adhesive
- 126: click portion
- 128: reinforcement plate

## Claims

1. An electricity storage module (100), comprising:
an electricity storage device (1); and
a holder (104) that holds the electricity storage device (1),
wherein the electricity storage device (1) comprises an electrode body (2) of cylindrical shape; and a film exterior body (4) comprising a housing part (12) that wraps the electrode body (2) and a sealing part (14) that seals the housing part (12); and
wherein the holder (104) is bonded to the sealing part(14),
**characterised in that** the electricity storage module (100) is further comprising a filler (106) that is interposed between the electricity storage device (1) and the holder (104) and of which the thermal conductivity at a first temperature is lower than the thermal conductivity at a second temperature that is lower than the first temperature.

2. The electricity storage module (100) according to claim 1,
wherein the electricity storage device (1) comprises a plurality of the electrode bodies (2), and a plurality of the housing parts (12) that respectively wrap the plurality of the electrode bodies (2), and
wherein the sealing part (14) seals each housing part (12) and connects the plurality of the housing parts (12) to each other.

3. The electricity storage module (100) according to claim 2, comprising:
a plurality of the electricity storage devices (1) arranged in a second direction (C) that intersects a first direction (B) in which a plurality of the electrode bodies (2) are aligned and an axis direction (A) of the electrode bodies (2); and
a plurality of the holders (104) arranged in the second direction (C) alternately with the plurality of the electricity storage devices (1),
wherein two of the holders (104) adjacent to each other sandwich a sealing part (14) and are both bonded to the sealing part (14).

4. The electricity storage module (100) according to claim 3,
wherein each holder (104) has a plate shape extending in the first direction (B), comprises a plurality of recesses (118) of trapezoidal prism shape that are arranged in the first direction (B) and into which housing parts (12) are respectively fitted, and also comprises a plurality of flat parts (120) that connect the recesses (118) adjacent to each other and that are bonded to a sealing part (14), and
wherein the electricity storage module (100) has a honeycomb structure in which a plurality of hexagonal prism-shaped spaces respectively surrounding the housing parts (12) are arranged.

5. The electricity storage module (100) according to any one of claims 1 to 4, wherein the thermal conductivity of the holder (104) is higher than the thermal conductivity of the filler (106) at the second temperature.

6. The electricity storage module (100) according to any one of claims 1 to 5, wherein the filler (106) contains a hollow glass bead (122).

7. The electricity storage module (100) according to any one of claims 1 through 6, wherein the filler (106) has thixotropy.

8. The electricity storage module (100) according to any one of claims 1 through 7, wherein the filler (106) covers an end face of the housing part (12) in an axis direction (A) of the electrode body (2).

9. The electricity storage module (100) according to any one of claims 1 through 8,
wherein the electricity storage device (1) comprises a plurality of the electrode bodies (2), and a plurality of the housing parts (12) that respectively wrap the plurality of the electrode bodies (2),
wherein the sealing part (14) seals each housing part (12) and connects the plurality of the housing parts (12) to each other,
wherein the electricity storage module (100) comprises:
a plurality of the electricity storage devices (1) arranged in a second direction (C) that intersects a first direction (B) in which a plurality of the electrode bodies (2) are aligned and an axis direction (A) of the electrode bodies (2); and
a plurality of the holders (104) arranged in the second direction (C) alternately with the plurality of the electricity storage devices (1),
wherein two of the holders (104) adjacent to each other sandwich a sealing part (14) and are both bonded to the sealing part (14),
wherein each holder (104) has a plate shape extending in the first direction (B), comprises a plurality of recesses (118) of trapezoidal prism shape that are arranged in the first direction (B) and into which housing parts (12) are respectively fitted, and also comprises a plurality of flat parts (120) that connect the recesses (118) adjacent to each other and that are bonded to a sealing part (14),
wherein the electricity storage module (100) has a honeycomb structure in which a plurality of hexagonal prism-shaped spaces respectively surrounding the housing parts (12) are arranged,
wherein the recesses (118) each comprise a bottom part(118a), and an inclined part (118b) that connects the bottom part (118a) and a flat part (120), and
wherein the filler (106) is disposed at least between the boundary of the bottom part (118a) and the inclined part(118b), and the corresponding housing part (12).

10. The electricity storage module (100) according to claim 9, wherein the filler (106) is interposed between a flat part (120) and a sealing part (14).

11. The electricity storage module (100) according to any one of claims 1 through 10, wherein the holder (104) comprises, at an end in an axis direction (A) of the electrode body (2), a plurality of click portions (126) bent toward an adjacent electricity storage device (1).

12. The electricity storage module (100) according to claim 11, wherein the click portions (126) overlap with the housing part (12) when viewed from the axis direction (A).

13. The electricity storage module (100) according to any one of claims 1 through 12, further comprising a reinforcement plate (128) connected to the holder (104).

14. The electricity storage module (100) according to claim 13, wherein the reinforcement plate (128) comprises a rib (130) extending in the aligning direction (C) of the electricity storage device (1) and the holder (104).

15. The electricity storage module (100) according to any one of claims 1 through 14,
wherein the electricity storage device (1) comprises a plurality of the electrode bodies (2), and a plurality of electrode leads (8, 10) electrically connected to each of the electrode bodies (2) and protruding from the sealing part (14), and
wherein the electricity storage module (100) comprises an insulation member (112) interposed between a plurality of the electrode leads (8, 10) and the holder (104).

16. The electricity storage module (100) according to claim 15, further comprising a bus bar (110) that electrically connects a plurality of the electrode leads (8, 10),
wherein the insulation member (112) comprises a support plate (114) on which the bus bar (110) is placed, and a lid (116) that covers the bus bar (110) on the support plate (114).

17. The electricity storage module (100) according to claim 16, wherein the lid (116) comprises a plurality of protrusions (116a) protruding toward the holder (104) when viewed from an axis direction (A) of the electrode body (2).

## Patentansprüche

1. Elektrizitätsspeichermodul (100), umfassend:
eine Elektrizitätsspeichervorrichtung (1); und
einen Halter (104), der die Elektrizitätsspeichervorrichtung (1) hält,
wobei die Elektrizitätsspeichervorrichtung (1) einen Elektrodenkörper (2) von zylindrischer Form; und einen Folien-Außenkörper (4) umfasst, der einen Aufnahmeteil (12), der den Elektrodenkörper (2) umhüllt, und einen Dichtungsteil (14), der den Aufnahmeteil (12) abdichtet, umfasst; und
wobei der Halter (104) mit dem Dichtungsteil (14) verbunden ist,
**dadurch gekennzeichnet, dass** das Elektrizitätsspeichermodul (100) ferner
einen Füllstoff (106) umfasst, der zwischen der Elektrizitätsspeichervorrichtung (1) und dem Halter (104) zwischengeschaltet ist und dessen Wärmeleitfähigkeit bei einer ersten Temperatur niedriger ist als die Wärmeleitfähigkeit bei einer zweiten Temperatur, die niedriger als die erste Temperatur ist.

2. Elektrizitätsspeichermodul (100) nach Anspruch 1,
wobei die Elektrizitätsspeichervorrichtung (1) eine Mehrzahl der Elektrodenkörper (2) und eine Mehrzahl der Aufnahmeteile (12), die jeweils die Mehrzahl der Elektrodenkörper (2) umhüllen, umfasst, und
wobei der Dichtungsteil (14) jeden Aufnahmeteil (12) abdichtet und die Mehrzahl der Aufnahmeteile (12) miteinander verbindet.

3. Elektrizitätsspeichermodul (100) nach Anspruch 2, umfassend:
eine Mehrzahl der Elektrizitätsspeichervorrichtungen (1), die in einer zweiten Richtung (C) angeordnet sind, die eine erste Richtung (B), in der eine Mehrzahl der Elektrodenkörper (2) ausgerichtet sind, und eine Achsenrichtung (A) der Elektrodenkörper (2) kreuzt; und
eine Mehrzahl der Halter (104), die in der zweiten Richtung (C) abwechselnd mit der Mehrzahl der Elektrizitätsspeichervorrichtungen (1) angeordnet sind,
wobei zwei der Halter (104), die einander benachbart sind, einen Dichtungsteil (14) einschließen und beide mit dem Dichtungsteil (14) verbunden sind.

4. Elektrizitätsspeichermodul (100) nach Anspruch 3,
wobei jeder Halter (104) eine Plattenform aufweist, die sich in der ersten Richtung (B) erstreckt, eine Mehrzahl von Aussparungen (118) von trapezförmiger Prismenform umfasst, die in der ersten Richtung (B) angeordnet sind und in die Aufnahmeteile (12) jeweils eingepasst sind, und auch eine Mehrzahl von Flachteilen (120) umfasst, die die einander benachbarten Aussparungen (118) verbinden und die mit einem Dichtungsteil (14) verbunden sind, und
wobei das Elektrizitätsspeichermodul (100) eine Wabenstruktur aufweist, in der eine Mehrzahl von sechseckigen prismaförmigen Räumen, die jeweils die Aufnahmeteile (12) umgeben, angeordnet sind.

5. Elektrizitätsspeichermodul (100) nach einem der Ansprüche 1 bis 4, wobei die Wärmeleitfähigkeit des Halters (104) höher ist als die Wärmeleitfähigkeit des Füllstoffs (106) bei der zweiten Temperatur.

6. Elektrizitätsspeichermodul (100) nach einem der Ansprüche 1 bis 5, wobei der Füllstoff (106) eine Hohlglaskugel (122) enthält.

7. Elektrizitätsspeichermodul (100) nach einem der Ansprüche 1 bis 6, wobei der Füllstoff (106) Thixotropie aufweist.

8. Elektrizitätsspeichermodul (100) nach einem der Ansprüche 1 bis 7, wobei der Füllstoff (106) eine Endfläche des Aufnahmeteils (12) in einer Achsenrichtung (A) des Elektrodenkörpers (2) bedeckt.

9. Elektrizitätsspeichermodul (100) nach einem der Ansprüche 1 bis 8,
wobei die Elektrizitätsspeichervorrichtung (1) eine Mehrzahl der Elektrodenkörper (2) und eine Mehrzahl der Aufnahmeteile (12), die jeweils die Mehrzahl der Elektrodenkörper (2) umhüllen, umfasst,
wobei der Dichtungsteil (14) jeden Aufnahmeteil (12) abdichtet und die Mehrzahl der Aufnahmeteile (12) miteinander verbindet,
wobei das Elektrizitätsspeichermodul (100) umfasst:
eine Mehrzahl der Elektrizitätsspeichervorrichtungen (1), die in einer zweiten Richtung (C) angeordnet sind, die eine erste Richtung (B), in der eine Mehrzahl der Elektrodenkörper (2) ausgerichtet sind, und eine Achsenrichtung (A) der Elektrodenkörper (2) kreuzt; und
eine Mehrzahl der Halter (104), die in der zweiten Richtung (C) abwechselnd mit der Mehrzahl der Elektrizitätsspeichervorrichtungen (1) angeordnet sind,
wobei zwei der Halter (104), die einander benachbart sind, einen Dichtungsteil (14) einschließen und beide mit dem Dichtungsteil (14) verbunden sind,
wobei jeder Halter (104) eine Plattenform aufweist, die sich in der ersten Richtung (B) erstreckt, eine Mehrzahl von Aussparungen (118) von trapezförmiger Prismenform umfasst, die in der ersten Richtung (B) angeordnet sind und in die Aufnahmeteile (12) jeweils eingepasst sind, und auch eine Mehrzahl von Flachteilen (120) umfasst, die die einander benachbarten Aussparungen (118) verbinden und die mit einem Dichtungsteil (14) verbunden sind,
wobei das Elektrizitätsspeichermodul (100) eine Wabenstruktur aufweist, in der eine Mehrzahl von sechseckigen prismaförmigen Räumen, die jeweils die Aufnahmeteile (12) umgeben, angeordnet sind,
wobei die Aussparungen (118) jeweils einen Bodenteil (118a) und einen geneigten Teil (118b), der den Bodenteil (118a) und einen Flachteil (120) verbindet, umfassen, und
wobei der Füllstoff (106) mindestens zwischen der Grenze des Bodenteils (118a) und des geneigten Teils (118b) und dem entsprechenden Aufnahmeteil (12) angeordnet ist.

10. Elektrizitätsspeichermodul (100) nach Anspruch 9, wobei der Füllstoff (106) zwischen einem Flachteil (120) und einem Dichtungsteil (14) zwischengeschaltet ist.

11. Elektrizitätsspeichermodul (100) nach einem der Ansprüche 1 bis 10, wobei der Halter (104) an einem Ende in einer Achsenrichtung (A) des Elektrodenkörpers (2) eine Mehrzahl von Klick-Abschnitten (126) umfasst, die zu einer benachbarten Elektrizitätsspeichervorrichtung (1) hin gebogen sind.

12. Elektrizitätsspeichermodul (100) nach Anspruch 11, wobei die Klick-Abschnitte (126) den Aufnahmeteil (12) überlappen, wenn sie aus der Achsenrichtung (A) betrachtet werden.

13. Elektrizitätsspeichermodul (100) nach einem der Ansprüche 1 bis 12, ferner umfassend eine Verstärkungsplatte (128), die mit dem Halter (104) verbunden ist.

14. Elektrizitätsspeichermodul (100) nach Anspruch 13, wobei die Verstärkungsplatte (128) eine Rippe (130) umfasst, die sich in der Ausrichtungsrichtung (C) der Elektrizitätsspeichervorrichtung (1) und des Halters (104) erstreckt.

15. Elektrizitätsspeichermodul (100) nach einem der Ansprüche 1 bis 14,
wobei die Elektrizitätsspeichervorrichtung (1) eine Mehrzahl der Elektrodenkörper (2) und eine Mehrzahl von Elektrodenleitungen (8, 10), die elektrisch mit jedem der Elektrodenkörper (2) verbunden sind und von dem Dichtungsteil (14) hervorstehen, umfasst, und
wobei das Elektrizitätsspeichermodul (100) ein Isolationselement (112) umfasst, das zwischen einer Mehrzahl der Elektrodenleitungen (8, 10) und dem Halter (104) zwischengeschaltet ist.

16. Elektrizitätsspeichermodul (100) nach Anspruch 15, ferner umfassend eine Stromschiene (110), die eine Mehrzahl der Elektrodenleitungen (8, 10) elektrisch verbindet,
wobei das Isolationselement (112) eine Trägerplatte (114), auf der die Stromschiene (110) angeordnet ist, und einen Deckel (116), der die Stromschiene (110) auf der Trägerplatte (114) abdeckt, umfasst.

17. Elektrizitätsspeichermodul (100) nach Anspruch 16, wobei der Deckel (116) eine Mehrzahl von Vorsprüngen (116a) umfasst, die zu dem Halter (104) hin hervorstehen, wenn sie aus einer Achsenrichtung (A) des Elektrodenkörpers (2) betrachtet werden.

## Revendications

1. Module de stockage d'électricité (100), comprenant :
un dispositif de stockage d'électricité (1) ; et
un support (104) qui maintient le dispositif de stockage d'électricité (1),
dans lequel le dispositif de stockage d'électricité (1) comprend un corps d'électrode (2) de forme cylindrique ; et un corps extérieur en film (4) comprenant une partie de logement (12) qui enveloppe le corps d'électrode (2) et une partie d'étanchéité (14) qui scelle la partie de logement (12) ; et
dans lequel le support (104) est lié à la partie d'étanchéité (14),
**caractérisé en ce que** le module de stockage d'électricité (100) comprend en outre
une charge (106) qui est interposée entre le dispositif de stockage d'électricité (1) et le support (104) et dont la conductivité thermique à une première température est inférieure à la conductivité thermique à une deuxième température qui est inférieure à la première température.

2. Module de stockage d'électricité (100) selon la revendication 1,
dans lequel le dispositif de stockage d'électricité (1) comprend une pluralité de corps d'électrode (2), et une pluralité de parties de logement (12) qui enveloppent respectivement la pluralité de corps d'électrode (2), et
dans lequel la partie d'étanchéité (14) scelle chaque partie de logement (12) et relie la pluralité de parties de logement (12) les unes aux autres.

3. Module de stockage d'électricité (100) selon la revendication 2, comprenant :
une pluralité de dispositifs de stockage d'électricité (1) agencés selon une deuxième direction (C) qui croise une première direction (B) selon laquelle une pluralité de corps d'électrode (2) sont alignés et une direction axiale (A) des corps d'électrode (2) ; et
une pluralité de supports (104) agencés selon la deuxième direction (C) en alternance avec la pluralité de dispositifs de stockage d'électricité (1),
dans lequel deux des supports (104) adjacents l'un à l'autre prennent en sandwich une partie d'étanchéité (14) et sont tous deux liés à la partie d'étanchéité (14).

4. Module de stockage d'électricité (100) selon la revendication 3,
dans lequel chaque support (104) a une forme de plaque s'étendant selon la première direction (B), comprend une pluralité d'évidements (118) de forme de prisme trapézoïdal qui sont agencés selon la première direction (B) et dans lesquels des parties de logement (12) sont respectivement insérées, et comprend également une pluralité de parties plates (120) qui relient les évidements (118) adjacents les uns aux autres et qui sont liées à une partie d'étanchéité (14), et
dans lequel le module de stockage d'électricité (100) présente une structure en nid d'abeille dans laquelle une pluralité d'espaces de forme de prisme hexagonal entourant respectivement les parties de logement (12) sont agencés.

5. Module de stockage d'électricité (100) selon l'une quelconque des revendications 1 à 4, dans lequel la conductivité thermique du support (104) est supérieure à la conductivité thermique de la charge (106) à la deuxième température.

6. Module de stockage d'électricité (100) selon l'une quelconque des revendications 1 à 5, dans lequel la charge (106) contient une bille de verre creuse (122).

7. Module de stockage d'électricité (100) selon l'une quelconque des revendications 1 à 6, dans lequel la charge (106) a une thixotropie.

8. Module de stockage d'électricité (100) selon l'une quelconque des revendications 1 à 7, dans lequel la charge (106) recouvre une face d'extrémité de la partie de logement (12) selon une direction axiale (A) du corps d'électrode (2).

9. Module de stockage d'électricité (100) selon l'une quelconque des revendications 1 à 8,
dans lequel le dispositif de stockage d'électricité (1) comprend une pluralité de corps d'électrode (2), et une pluralité de parties de logement (12) qui enveloppent respectivement la pluralité de corps d'électrode (2),
dans lequel la partie d'étanchéité (14) scelle chaque partie de logement (12) et relie la pluralité de parties de logement (12) les unes aux autres,
dans lequel le module de stockage d'électricité (100) comprend :
une pluralité de dispositifs de stockage d'électricité (1) agencés selon une deuxième direction (C) qui croise une première direction (B) selon laquelle une pluralité de corps d'électrode (2) sont alignés et une direction axiale (A) des corps d'électrode (2) ; et
une pluralité de supports (104) agencés selon la deuxième direction (C) en alternance avec la pluralité de dispositifs de stockage d'électricité (1),
dans lequel deux des supports (104) adjacents l'un à l'autre prennent en sandwich une partie d'étanchéité (14) et sont tous deux liés à la partie d'étanchéité (14),
dans lequel chaque support (104) a une forme de plaque s'étendant selon la première direction (B), comprend une pluralité d'évidements (118) de forme de prisme trapézoïdal qui sont agencés selon la première direction (B) et dans lesquels des parties de logement (12) sont respectivement insérées, et comprend également une pluralité de parties plates (120) qui relient les évidements (118) adjacents les uns aux autres et qui sont liées à une partie d'étanchéité (14),
dans lequel le module de stockage d'électricité (100) présente une structure en nid d'abeille dans laquelle une pluralité d'espaces de forme de prisme hexagonal entourant respectivement les parties de logement (12) sont agencés,
dans lequel les évidements (118) comprennent chacun une partie de fond (118a), et une partie inclinée (118b) qui relie la partie de fond (118a) et une partie plate (120), et
dans lequel la charge (106) est disposée au moins entre la frontière de la partie de fond (118a) et la partie inclinée (118b), et la partie de logement (12) correspondante.

10. Module de stockage d'électricité (100) selon la revendication 9, dans lequel la charge (106) est interposée entre une partie plate (120) et une partie d'étanchéité (14).

11. Module de stockage d'électricité (100) selon l'une quelconque des revendications 1 à 10, dans lequel le support (104) comprend, à une extrémité selon une direction axiale (A) du corps d'électrode (2), une pluralité de portions à clic (126) recourbées vers un dispositif de stockage d'électricité (1) adjacent.

12. Module de stockage d'électricité (100) selon la revendication 11, dans lequel les portions à clic (126) chevauchent la partie de logement (12) lorsqu'elles sont vues selon la direction axiale (A).

13. Module de stockage d'électricité (100) selon l'une quelconque des revendications 1 à 12, comprenant en outre une plaque de renforcement (128) reliée au support (104).

14. Module de stockage d'électricité (100) selon la revendication 13, dans lequel la plaque de renforcement (128) comprend une nervure (130) s'étendant selon la direction d'alignement (C) du dispositif de stockage d'électricité (1) et du support (104).

15. Module de stockage d'électricité (100) selon l'une quelconque des revendications 1 à 14,
dans lequel le dispositif de stockage d'électricité (1) comprend une pluralité de corps d'électrode (2), et une pluralité de fils d'électrode (8, 10) électriquement connectés à chacun des corps d'électrode (2) et faisant saillie depuis la partie d'étanchéité (14), et
dans lequel le module de stockage d'électricité (100) comprend un élément d'isolation (112) interposé entre une pluralité des fils d'électrode (8, 10) et le support (104).

16. Module de stockage d'électricité (100) selon la revendication 15, comprenant en outre une barre omnibus (110) qui connecte électriquement une pluralité des fils d'électrode (8, 10),
dans lequel l'élément d'isolation (112) comprend une plaque de support (114) sur laquelle la barre omnibus (110) est placée, et un couvercle (116) qui recouvre la barre omnibus (110) sur la plaque de support (114).

17. Module de stockage d'électricité (100) selon la revendication 16, dans lequel le couvercle (116) comprend une pluralité de protubérances (116a) faisant saillie vers le support (104) lorsqu'elles sont vues selon une direction axiale (A) du corps d'électrode (2).
